(19) **Europäisches Patentamt**

**European Patent Office**

**Office européen des brevets**

(11) **EP 1 252 855 B1**

(12) **EUROPEAN PATENT SPECIFICATION**

(45) Date of publication and mention
of the grant of the patent:
**24.05.2006 Bulletin 2006/21**

(51) Int Cl.:
*A47L 15/42* *(2006.01)*    *C02F 1/42* *(2006.01)*

(21) Application number: **02006613.0**

(22) Date of filing: **25.03.2002**

(54) **Control system for a water softener device, in particular for household appliances**

Regelungssystem für eine Wasserenthärtungsanlage, insbesondere für Hausgeräte

Système de réglage pour un dispositif adoucisseur d'eau, en particulier pour appareils ménagers

(84) Designated Contracting States:
**DE ES FR GB IT SE**

(30) Priority: **26.04.2001 IT MI010874**

(43) Date of publication of application:
**30.10.2002 Bulletin 2002/44**

(73) Proprietor: **WHIRLPOOL CORPORATION**
**Benton Harbor**
**Michigan 49022 (US)**

(72) Inventors:
• **Braggion, Davide**
**V.le G. Borghi 27,**
**21025 Comerio (IT)**
• **Castelli, Paolo**
**V.le G. Borghi 27,**
**21025 Comerio (IT)**
• **Clerici, Ubaldo**
**V.le G. Borghi 27,**
**21025 Comerio (IT)**
• **Gottinger, Claudio**
**V.le G. Borghi 27,**
**21025 Comerio (IT)**

(74) Representative: **Guerci, Alessandro**
**Whirlpool Europe S.r.l.**
**Patent Department**
**Viale G. Borghi 27**
**21025 Comerio (VA) (IT)**

(56) References cited:
**EP-A- 0 900 765**    **EP-A- 0 940 494**
**WO-A-98/14789**    **US-A- 4 847 598**
**US-A- 5 455 513**

**Description**

The invention relates to a water softener device, in particular for household appliances such as dishwashers, laundry washing machines and the like, in accordance with the introduction to the accompanying main claim. In particular, the invention relates to an electronic system for electrical conductivity measurements, to be used in said water softener device.

Modern washers, in particular dishwashers, use a water softener to remove the calcium from the entering water in order to prevent lime depositing on the articles to be washed or on the electrical water heating elements, with progressive reduction in their efficiency, to the point of breakage.

The water softeners comprise a cation exchange resin, which however becomes spent after a more or less short time of use (depending on the hardness of the water), and has therefore to be regenerated by means of conventional kitchen salt.

Various methods are currently used to determine when the resin has to be regenerated. A first method measures the quantity of water used (this measurement being made either empirically on the basis of the machine characteristics or by a flow meter and the passage of time). When the water quantity reaches a predetermined value the resin is regenerated.

This method has been refined in the sense that the user is able to feed in data relative to the hardness of the water used. Another method regenerates the cation exchange resin after every wash cycle.

DOS 1642488 states a further method and describes a control device for the water softener provided with sensors formed from two pairs of electrodes in a bridge arrangement, which effect conductivity measurements providing data useful in determining when regeneration is to take place. At least one pair of electrodes is located in a resin cartridge positioned downstream of the softener column.

EP-A2-900765 relates to a method which recalls that of the aforestated DOS and describes a water softener device in which knowledge of the state of the ion exchange resin is obtained by electrical conductivity measurements both on the resin and on the entering and leaving water.

These measurements are again obtained by electrodes positioned at different points of the softener column. The conductivity of the water entering the column and of the water leaving the column is measured.

Other electrodes for measuring the conductivity of the resin plus water are also provided. A flowmeter for the water entering, a dispenser and a regenerating salt vessel connectable to the column are also provided. An electronic circuit - merely mentioned and represented - controls the regeneration by operating valve means and evaluating data received from the aforesaid electrodes, the flowmeter and a temperature sensor.

Sinusoidal alternating current is used for the conductivity measurements, with the result that the circuitry of the part relative to the determination and the initial handling of the interelectrode conductivity values is particularly complex and expensive (specifically because of the need to use additional components for sinusoidal wave regeneration and for conditioning the signal originating from the measurement electrodes, consisting of an amplifier, a peak sensor and a low-pass filter). Relatively high voltages can also occur between the electrodes such as to give rise to electrolysis phenomena with their consequent corrosion.

The main object of the present invention is to provide a method for determining the state of the water softener which is economical (especially considering the massive scale of the production of washers using water softeners), is precise and does not cause voltages to be applied to the electrodes which could prejudice their corrosion resistance and hence their life, while still enabling the user to save on water, regenerating salt and resin, without the need to know the water hardness.

This and further objects which will be more apparent from the ensuing detailed description are attained by the device according to the teachings of the accompanying claims.

The invention will be better understood from the description of a preferred embodiment thereof given hereinafter by way of non-limiting example and illustrated in the accompanying drawings, in which:

   Figure 1 schematically shows part of a household electrical appliance incorporating the water softener device and the conductivity measurement control system according to the present invention;
   Figure 2 shows a block diagram of the electronic measurement circuit relative to the water softener device;
   Figure 3 schematically shows a part of the circuit of Figure 2, and serves to clarify the operativeness of the system on the basis of an example; and
   Figure 4 schematically shows a flow diagram of the household appliance and the water softener device.

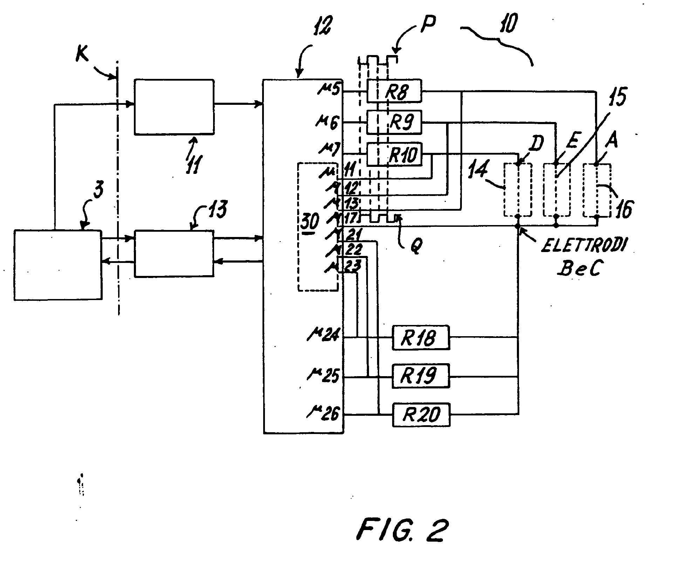

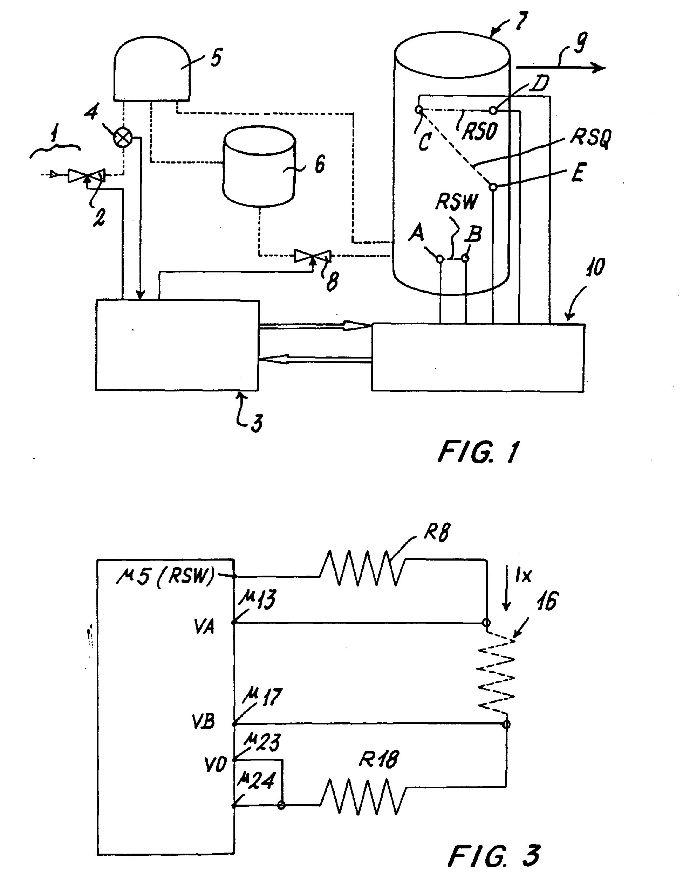

With reference to the figures, and in particular firstly to Figure 1, the reference numeral 1 indicates a mains water inlet, including an inlet valve 2 controlled by a primary control circuit 3 pertaining to a washer (a dishwasher in the example) and interfaced with the user to enable this latter to set the required wash program.

A flowmeter 4 is present downstream of the valve 2, to transmit its measured data to the primary control circuit 3.

The water passes from the flowmeter 4 into a dispenser 5 internally divided into two compartments joined by an overflow, one of these being connected to a container 6 to contain a regenerating salt (for the cation exchange resin described hereinafter) and in which the relative salt solution is formed.

The container 6 communicates with the column 7 of cation exchange resin via a valve 8 controlled by the primary control circuit 3.

The other compartment of the dispenser 5 is connected to the column 7 of cation exchange resin, which comprises an outlet for the softened water, this water passing for use in the washer.

According to the invention, several electrodes (of corrosion-resistant material), five in number in Figure 1, are provided in the column 7, these penetrating into the column through the relative wall.

The five electrodes are identified by the letters A, B, C, D, E in Figure 1, their function being the following:

* electrode A: electrode for activating the signal for measuring the conductivity of the water entering the column (i.e. the mains water), indicated by RSW.
* electrode B: electrode for returning the signal for measuring the conductivity of the water entering the column (common return).
* electrode C: electrode for returning the signal for measuring the transverse and upper conductivity of the cation exchange resin (common return).
* electrode D: electrode for activating the signal for measuring the upper conductivity of the cation exchange resin, indicated as RSO.
* electrode E: electrode for activating the signal for measuring the transverse conductivity of the cation exchange resin, indicated as RSG. The mains water conductivity (RSW) is determined by the electrodes A and B, and is then processed to obtain the relative hardness (given the correlation between the two quantities).

The upper conductivity (RSO) of the cation exchange resin is determined by the electrodes D and C.

The transverse conductivity (RSQ) of the cation exchange resin is determined by the electrodes E and C.

The parameters RSO and RSQ provide indications regarding the state of depletion of the resins (the continuous flow of mains water through the column 7 causes progressive deposition of calcium and magnesium ions on the cation exchange resin).

The state of resin depletion and the information on the entering water hardness together identify the need to start the cation exchange resin regeneration process. This process is controlled by the primary control circuit 3, with opening of the valve 8.

The electrodes in question are connected to an electronic measurement circuit 10 (provided with a controller 11) dialoguing with the primary control circuit of the household electrical appliance.

The microcontroller used in the measurement circuit 10 must be provided with an analog/digital converter with at least seven inputs and at least eight input/output pins for generic use.

Two types of microcontroller having these characteristics are the MC68HC908JK3 produced by Motorola and the STLITEX produced by ST.

In Figure 1 the interelectrode cooperation is identified by the dashed and dotted line paths indicated by RSW, RSO and RSQ.

In Figure 2 the primary control circuit 3 is shown to the left of the separation line K and the electronic measurement circuit 10 is shown to the right thereof in terms of its components, together with the admittances in block form (here expressed as impedance but considered in the simpler ensuing description as resistance to facilitate the description relative to the paths RSW, RSO, RSQ).

With reference to Figure 2, the measurement circuit 10 comprises a class II-isolated dc/dc power supply/converter, indicated by 11, connected to the primary control circuit 3 and powering a microcontroller 12 with an integrated analog/digital converter 30. The microprocessor dialogues with the main control circuit via a pair of photocouplers 13 to ensure class II isolation.

The pins of the microcontroller 12 are identified by the prefix μ associated with a numerical suffix (for example μ5, μ6 etc.). The electrode B and the electrode C which represent respectively the common signal return for measuring the conductivity of the water entering (RSW) and the common signal return for measuring the upper (RSO) and transverse (RSQ) conductivity of the resin are short-circuited on the measurement circuit 10 and connected to the pin μ17 of the microcontroller. The pins μ5, μ6, μ7 are respectively connected via limiter resistors R8, R9 and R10 to the blocks 14, 15 and 16 representative, as stated, of the variable resistances (impedances) of the inter-electrode paths a, b, c. The electrodes A, B, C, D, E of Figure 1 are also shown. The pins μ11, μ12, μ13 are connected respectively to the lines extending from R8 to the block 16, from R9 to the block 15 and from R10 to the block 14. The blocks 14, 15 and 16 are all connected to the pin μ17 (common return) and to resistors R18, R19, R20. R18, R19 and R20 represent reference resistors of different resistance values. Each of these resistors is connected to two separate pins of the microcontroller, specifically R18 to μ23 and μ 24, R19 to μ22 and μ 25, and R20 to μ21 and μ26. By way of example, these can have values of 20 Ohm, 600 Ohm and 2400 Ohm respectively. By suitably selecting these (by means of the microcontroller 12) the voltage at the electrodes A, B, C, D, E can be made to remain within margins of safety such as not to prejudice their resistance to corrosion.

For further clarification, reference will now be made to Figure 3.

On the basis of this figure the measuring process for the (electrical) "resistance" 16 of the mains water entering the water softener column 7 will be analyzed with the involvement of the resistor R18. The task is to determine the unknown value of this resistance R16. It should be noted that a similar analysis is also applicable if the resistor R19 or R20 is selectively involved (by means of the microcontroller 12), in which case the pins $\mu 25$ and $\mu 26$ are involved instead of the pin $\mu 24$.

If the (likewise unknown) resistance 15 or 14 is to be measured, the pin $\mu 5$ is conceptually replaced by the pin $\mu 6$ or $\mu 7$.

In the example of Figure 3 the pin $\mu 5$ and the pin $\mu 24$ are activated with two substantially square waves P and Q mutually offset by 180° (50% duty cycle with frequency between 1 kHz and 10 kHz). All the other pins are forced (by the microcontroller 12) into the high impedance state. It should be noted that when it is the turn (controlled by the microcontroller 12) of R14 and R15 to be measured, these square waves are applied to these resistances, the square waves being in opposition to that of the pin $\mu 26$. The voltages at A and B (these voltages being indicated by VA and

VB respectively) are measured at the pins $\mu 13$ and $\mu 17$. The low voltage (Vo) of the microcontroller 12 is measured at the pin $\mu 23$.

When the voltage at the pin $\mu 5$ is high and low at the pin $\mu 24$ a current Ix flows in the direction indicated in Figure 3. Taking account of the high impedance of the pins from $\mu 11$ to $\mu 23$ (which are those of the analog/digital converter 30), the following can be written:

$$Ix = (VB - VO)/R18 \qquad (1)$$

The (unknown) resistance value 16 (relating to the mains water hardness) is obtained from the following equation:

$$resistance\ 16 = (VA - VB)/Ix \qquad (2)$$

which by appropriate substitution gives:

$$resistance\ 16 = R18[(VA - VB)/(VB - VO)]$$

The unknown resistance 16 is thus determined by the microcontroller 12. In like manner, with the aforesaid substitutions, the resistances relative to the blocks 14 and 15 are determined.

It is however possible that during the voltage measurement at the electrodes (for example VA - VB) undesirably high values are attained such as to produce electrolysis effects on the electrodes concerned (compromising their integrity). According to the invention the conductivity measurements take place in such a manner as to avoid this drawback, namely by selecting the reference resistors R18, R19, R20 such as to maintain the voltage within safety limits.

The measurement commences by selecting that of the reference resistors R18, R19 and R20 which has the maximum value and proceeds with that reference resistor in the aforestated manner (equations 1, 2 and 3). If the unknown (14, 15, 16) calculated in this manner has the same order of magnitude as the maximum reference resistor (for example R18), the measurement made is transmitted in adequate form to the primary control circuit 3 via the photocouplers 13, in that if the reference resistor of intermediate value (for example R19) had been used it would have given rise to an unacceptable interelectrode voltage drop.

If however the orders of magnitude are different (i.e. unknown value << maximum reference resistor adopted), the unknown is calculated using the resistor of intermediate value (e.g. R19).

If in this situation conditions analogous to the preceding again occur, i.e. if the calculated unknown is of the same order of magnitude as the value of the intermediate reference resistor, the information relative to the calculated unknown again passes to the primary electronic circuit; if however the calculated unknown is of a different order of magnitude than the value of the intermediate resistor, the unknown is calculated by adopting the minimum resistor value (e.g. R20).

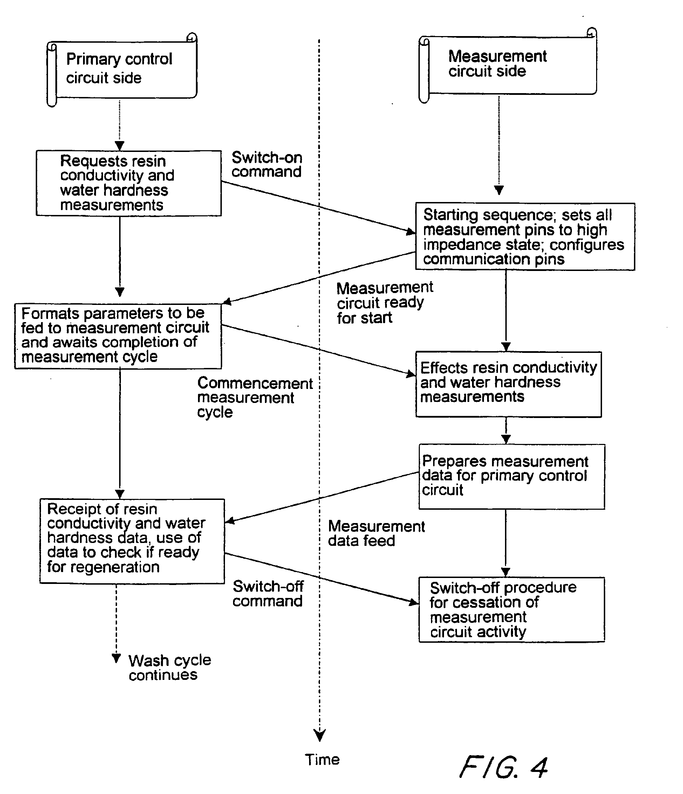

Figure 4 shows in a manner which is immediately understandable (given the fullness of the information shown therein) the relative flow diagram both of the sequence of operative steps of the primary control circuit 3 and of the sequence of operative steps of the measurement circuit, together with the logic interconnections between the two sequences.

With the data fed to it by the electronic measurement circuit 10, the primary control circuit 3, using data memorized in its own memory, processes the times and modes involved in controlling the regeneration of the cation exchange resin column 9. On the basis of the memorized data, it is also able to establish, and if opportune display, the current state of the resin.

It should be noted that the measurements regarding current values of the unknowns are of very short duration (for example 4-10 periods of the applied voltages) and are preferably effected (see Figure 4) prior to the actual wash cycle.

## Claims

1. A water softener device, in particular for household appliances such as dishwashers, laundry washing machines and the like, comprising a column (7) of ion exchange material, and water and material sensors (A, B, C, D, E) for determining quantities concerning the operativeness of said column by means of electrical conductivity measurements, **characterised in that** the sensors (A, B, C, D, E) are electrodes powered by an electronic measurement circuit (10) with substantially square wave voltages in phase opposition.

2. A device as claimed in claim 1, wherein said electrodes (A, B, C, D, E) are cooperating electrically in pairs, to a first electrode of each pair there being applied a substantially square wave voltage, to the second electrode of each pair there being applied a substantially square wave voltage in phase opposition to the first.

3. A device as claimed in claim 1 or claims 1 and 2, wherein the electronic measurement circuit (10) comprises a microcontroller (12) incorporating an analog/digital converter.

4. A device as claimed in claim 1 or claims 1 and 2 or claims 1, 2 and 3, wherein the microcontroller (12) constitutes the source of the square wave voltages.

5. A device as claimed in one or more of the preceding claims, wherein the pairs of sensors (A, B, C, D, E) are excitable in succession by the microcontroller (12).

6. A device as claimed in one or more of the preceding claims, wherein limiter resistors (R8, R9, R10) are provided in the connections between the microcontroller (12) and one of the electrodes (A, B, C, D, E) of each pair.

7. A device as claimed in one or more of the preceding claims, wherein reference resistors of different value (R18, R19, R20) are provided for selective connection in series with each selectively chosen pair of electrodes (A, B, C, D, E) in order to keep the voltage at the electrodes (A,B,C,D,E) within margins of safety.

8. A household appliance comprising an electronic control circuit (3) and a water softener device according to one or more of the preceding claims, **characterized in that** the electronic measurement circuit (10) comprises photoelectronic couplers (13) through which it dialogues with the electronic control circuit (3) of the household electrical appliance in which the water softener device is incorporated.

9. A household appliance as claimed in claim 8, wherein it comprises a microcontroller (12) that is powered via a dc/dc converter (3).

## Patentansprüche

1. Wasserenthärtungsgerät, insbesondere für Haushaltsgeräte, wie zum Beispiel Geschirrspüler, Waschmaschinen und dergleichen, umfassend eine Säule (7) aus Ionenaustauschmaterial sowie Wasser- und Materialsensoren (A, B, C, D, E) zum Bestimmen von Mengen, die die Funktionsweise der Säule betreffen, mittels Messungen der elektrischen Leitfähigkeit, **dadurch gekennzeichnet, dass** sich in den Sensoren (A, B, C, D, E) Elektroden befinden, die von einem elektronischen Messschaltkreis (10) mit im Wesentlichen Rechteckwellenspannungen in Phasenopposition versorgt werden.

**2.** Vorrichtung nach Anspruch 1, wobei die Elektroden (A, B, C, D, E) elektrisch in Paaren zusammenarbeiten, wobei an einer ersten Elektrode jedes Paars eine im Wesentlichen Rechteckwellenspannung angelegt wird, wobei an der zweiten Elektrode jedes Paars eine im Wesentlichen Rechteckwellenspannung in Phasenopposition zu der ersten angelegt wird.

**3.** Vorrichtung nach Anspruch 1 und 2, wobei der elektronische Messschaltkreis (10) einen Mikrocontroller (12) aufweist, der einen Analog-Digitalwandler enthält.

**4.** Vorrichtung nach Anspruch 1 oder Anspruch 1 und 2 oder Anspruch 1, 2 und 3, wobei der Mikrocontroller (12) die Quelle der Rechteckwellenspannungen bildet.

**5.** Vorrichtung nach einem oder mehreren der vorhergehenden Ansprüche, wobei die Paare von Sensoren (A, B, C, D, E) nacheinander durch den Mikrocontroller (12) erregt werden können.

**6.** Vorrichtung nach einem oder mehreren der vorhergehenden Ansprüche, wobei Begrenzungswiderstände (R8, R9, R10) in den Verbindungen zwischen dem Mikrocontroller (12) und einer der Elektroden (A, B, C, D, E) jedes Paars vorgesehen sind.

**7.** Vorrichtung nach einem oder mehreren der vorhergehenden Ansprüche, wobei Referenzwiderstände verschiedener Werte (R18, R19, R20) zum selektiven Anschluss in Serie mit jedem selektiv ausgewählten Paar von Elektroden (A, B, C, D, E) bereitgestellt sind, um die Spannung an den Elektroden (A, B, C, D, E) innerhalb von Sicherheitsgrenzen zu halten.

**8.** Haushaltsgerät umfassend einen elektronischen Steuerschaltkreis (3) und eine Wasserenthärtüngsvörrichtung nach einem oder mehreren der vorhergehenden Ansprüche, **dadurch gekennzeichnet, dass** der elektronische Messschaltkreis (10) fotoelektrische Koppler (13) umfasst, durch welche er mit dem elektronischen Steuerschaltkreis (3) des Elektrohaushaltsgeräts, in den das Wasserenthärtungsgerät eingebaut ist, kommuniziert.

**9.** Haushaltsgerät nach Anspruch 8, das einen Mikrocontroller (12) aufweist, der über einen Gleichstrom/Gleichstromwandler (3) gespeist wird.

## Revendications

**1.** Dispositif adoucisseur d'eau, en particulier pour des appareils ménagers tels que des lave-vaisselle, des machines à laver et analogues, comportant une colonne (7) d'un matériau d'échange ionique, et des capteurs d'eau et de matériau (A, B, C, D, E) pour déterminer des quantités concernant la capacité à fonctionner de ladite colonne au moyen de mesures de conductivité électrique, **caractérisé en ce que** les capteurs (A, B, C, D, E) sont commandés par des électrodes par un circuit de mesure électronique (10) avec des tensions à onde sensiblement carrée en opposition de phase.

**2.** Dispositif selon la revendication 1, dans lequel lesdites électrodes (A, B, C, D, E) coopèrent électriquement par paires, une tension à onde sensiblement carrée étant appliquée à une première électrode de chaque paire, une tension à onde sensiblement carrée étant appliquée à la seconde électrode de chaque paire en opposition de phase à la première.

**3.** Dispositif selon la revendication 1 ou les revendications 1 et 2, dans lequel le circuit de mesure électronique (10) comprend un microcontrôleur (12) comportant un convertisseur analogique/numérique.

**4.** Dispositif selon la revendication 1 ou les revendications 1 et 2 ou les revendications 1, 2 et 3, dans lequel le microcontrôleur (12) constitue la source des tensions à onde carrée.

**5.** Dispositif selon l'une ou plusieurs des revendications précédentes, dans lequel les paires de capteurs (A, B, C, D, E) peuvent être excitées en succession par le microcontrôleur (12).

**6.** Dispositif selon l'une ou plusieurs des revendications précédentes, dans lequel des résistances limitrices (R8, R9, R10) sont prévues dans les connexions entre le microcontrôleur (12) et une des électrodes (A, B, C, D, E) de chaque paire.

**7.** Dispositif selon l'une ou plusieurs des revendications précédentes, dans lequel les résistances de référence de valeur différente (R18, R19, R20) sont prévues pour une connexion sélective en série avec chaque paire d'électrodes choisie sélectivement (A, B, C, D, E) afin de maintenir la tension aux électrodes (A, B, C, D, E) à l'intérieur de marges de sécurité.

**8.** Appareil ménager comportant un circuit de contrôle électronique (3) et un dispositif adoucisseur d'eau selon l'une ou plusieurs des revendications précédentes, **caractérisé en ce que** le circuit de mesure électronique (10) comporte des coupleurs photoélectroniques (13) grâce auxquels il dialogue avec le circuit de contrôle électronique (3) de l'appareil électroménager dans lequel le dispositif adoucisseur d'eau est incorporé.

**9.** Appareil ménager selon la revendication 8, comportant un microcontrôleur (12) qui est commandé par l'intermédiaire d'un convertisseur continu/continu (3).

FIG. 2

**FIG. 1**

**FIG. 3**

Primary control
circuit side

Measurement
circuit side

Requests resin
conductivity and
water hardness
measurements

Switch-on
command

Starting sequence; sets all
measurement pins to high
impedance state; configures
communication pins

Measurement
circuit ready
for start

Formats parameters to be
fed to measurement circuit
and awaits completion of
measurement cycle

Commencement
measurement
cycle

Effects resin conductivity
and water hardness
measurements

Prepares measurement
data for primary control
circuit

Receipt of resin
conductivity and water
hardness data, use of
data to check if ready
for regeneration

Measurement
data feed

Switch-off
command

Switch-off procedure
for cessation of
measurement
circuit activity

Wash cycle
continues

Time

FIG. 4